(19) Europäisches Patentamt European Patent Office Office européen des brevets

(11) **EP 4 467 823 A1**

(12) **EUROPEAN PATENT APPLICATION**

(43) Date of publication:
**27.11.2024 Bulletin 2024/48**

(21) Application number: **23175608.1**

(22) Date of filing: **26.05.2023**

(51) International Patent Classification (IPC):
**F16B 25/00** *(2006.01)*      B23G 9/00 *(2006.01)*
**B23K 26/38** *(2014.01)*

(52) Cooperative Patent Classification (CPC):
**F16B 25/0026; F16B 25/0047; F16B 25/0052;
F16B 25/0094;** B23G 9/001; B23K 26/38

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Hilti Aktiengesellschaft
9494 Schaan (LI)**

(72) Inventors:
• **Goodwin, Zachary
  9470 Buchs (CH)**
• **Gstach, Peter
  6719 Bludesch (AT)**

• **Spampatti, Matteo
  9470 Buchs (CH)**
• **Strouf, Mathias
  9464 Rüthi (CH)**
• **Gebauer, Christian
  9450 Altstätten (CH)**
• **Domani, Guenter
  88138 Weissensberg (DE)**
• **Pol, Frederic
  6800 Feldkirch (AT)**

(74) Representative: **Hilti Aktiengesellschaft
Corporate Intellectual Property
Feldkircherstrasse 100
Postfach 333
9494 Schaan (LI)**

(54) **SCREW COMPRISING ROOT AND CREST SERRATIONS**

(57)      Concrete screw comprising a shaft 10, at least one screw thread 30, which is arranged on the shaft, winds around the shaft and protrudes from the shaft, and a separate helix element 37, which is arranged non-monolithically on the shaft, wherein the separate helix element winds around the shaft, protrudes from the shaft, and constitutes at least a section of the at least one screw thread, wherein the separate helix element comprises a crest 39 and a root 34, and wherein the root is provided with a first root serration 51 that is engaged, at least partly, by the shaft, characterized in that the crest is provided with a crest serration 53.

Fig. 2

EP 4 467 823 A1

## Description

The invention relates to a concrete screw according to the preamble of claim 1.

EP3916246 A1 discloses a concrete screw provided with a separate helix element that comprises a crest and a root, wherein the root engages two facing toothings provided in the shaft.

EP2501944 B1 describes another concrete screw provided with a separate helix element attached to the shaft. The separate helix element of EP2501944 B1 might be provided with recesses to form cutting teeth.

WO22231920 A1, EP3380737 B1 and EP2980424 A1 relate to monolithic concrete screws, in which the respective threads are provided with cutting teeth.

It is an object of the invention to provide a concrete screw that is able to provide particularly good performance, reliability and/or durability.

This object is achieved by a screw according to claim 1. Dependent claims refer to preferred embodiments of the invention.

The invention provides a concrete screw comprising

- a shaft,
- at least one screw thread, which is arranged on the shaft, winds around the shaft and protrudes from the shaft, and
- a separate helix element, which is arranged non-monolithically on the shaft, wherein the separate helix element winds around the shaft, protrudes from the shaft, and constitutes at least a section of the at least one screw thread,
- wherein the separate helix element comprises a crest and a root, and
- wherein the root is provided with a first root serration that is engaged, at least partly, by the shaft,

characterized in that

- the crest is provided with a crest serration.

According to the invention, the separate helix element is provided with an at least double serration, one being located at the crest and the other at the root of the separate helix element.

The invention is based on the finding that the installation process of a concrete screw with a separate helix element leads to significant torsional forces, which tend to unwind the separate helix element from the shaft. The described concrete screw counteracts this tendency by at least two serrations, namely at least one root serration, which is engaged by corresponding shaft structures such as embossments, thereby providing particularly good torsional interlock, and a crest serration, which on the one hand provides pre-determined weakening points, but which on the other hand provides relief structures for concrete debris, as well as cutting structures, which both can reduce torsional forces during installation. Accordingly, torsional resistance can be increased while decreasing torsional loading, which in total can provide particularly good screw performance.

The inventive screw is a concrete screw, i.e. the screw, in particular the screw thread thereof, is able to, at least partly, tap its mating internal screw thread groove in a concrete substrate.

The shaft is an elongate member and can, in particular, be generally cylindrical, more preferably circular cylindrical, possibly including a groove that accommodates the separate helix element. The shaft has a tip end, a rear end, which is located opposite the tip end, and a longitudinal axis, which extends through the rear end and through the tip end. The shaft can have, for example, a shaft diameter ranging from 8 mm to 14 mm, inclusive. Various shaft lengths can be provided.

The tip end and the rear end, respectively, constitute opposite ends of the shaft. The tip end is that end of the shaft that is intended to be inserted first into a borehole when the screw is installed. The shaft might be pointed at the tip end, but is preferably blunt at the tip end. The screw can also comprise a drive for imparting torque on the shaft. The drive could be located at the rear end of the shaft, for example if the drive is a head, but it could also be located within the shaft, for example if the screw is a headless screw. If a head is provided, it could be e.g. a hex head, a countersunk head, a hex head provided with an additional threaded stud, or others.

The at least one screw thread is usually generally helical, but could deviate from a strict mathematical helix, e.g. in order to provide additional functionality. The at least one screw thread winds around the shaft and the longitudinal axis of the shaft, i.e. it turns helically around the shaft, in particular by one or more turns, more preferably by at least two or three turns. The screw thread is an external thread. It radially protrudes from the shaft and can engage a mating internal thread.

For a particular straightforward design, the screw can comprise only a single screw thread. However, additional screw threads might also be provided, e.g. for additional functionality. These additional screw threads might be axially overlapping or non-overlapping with respect to the at least one screw thread and might be designed differently from the at least one screw thread or in analogy thereto.

The separate helix element and the shaft are non-monolithic with respect to one another. Accordingly, they are separate pieces, and/or at least one joint or seam is provided between them. In particular, the separate helix element and the shaft, respectively, can be manufactured from different pieces of material and/or separately from one another, and joined afterwards. In particular, the separate helix element is non-monolithically connected to the shaft, in particular so as to transfer tensile pull-out forces directed along the longitudinal axis of the shaft from the shaft into the separate helix element, so that pull-out load can be transferred from the shaft via the separate helix element into the surrounding substrate. Pull-out forces, in this connection, are rearwardly directed axial forces.

The separate helix element and the shaft are joined to give the concrete screw. Joining of the separate helix element and the shaft could e.g. include embossing the anchor shaft, more particularly embossing the shaft material around the separate helix element so as to provide a mechanical interlock, in particular between the shaft and the at least one root serration. In alternative embodiments, joining might also include alternative joining methods such as welding.

The separate helix element extends along the longitudinal axis of the shaft. The separate helix element is usually generally helical, but could deviate from a strict mathematical helix, e.g. in order to provide additional functionality. The separate helix element winds around the shaft and the longitudinal axis of the shaft, i.e. it turns helically around the shaft, in particular by one or more turns.

The separate helix element constitutes at least a section, in particular at least a helical section, of the at least one screw thread. Thus, the screw thread could also have additional helical sections, which are not formed by the separate helix element, and which could be located in front of the separate helix element (i.e. tipwardly) and/or rearwardly thereof. However, the separate helix element could also constitute the entirety of the at least one screw thread, which can be preferred.

The separate helix element has a crest, which radially protrudes from the shaft, which constitutes the screw thread, and/or which is intended for, at least partial, engagement of the surrounding substrate. The separate helix element also has a root, which is radially closer to the shaft than the crest. The root can in particular be, at least partly, embedded in the shaft, preferably in a groove that is, advantageously, provided in the shaft. The first root serration is engaged by the shaft at least in parts, i.e. the shaft is provided with a corresponding shaft serration that interlocks with the first root serration. This shaft serration can in particular be provided at an embossment of the shaft.

Whenever used in this document, the directions "axial", "longitudinal", "radial" and "circumferential" can refer, in particular, to the longitudinal axis of the shaft, which might coincide with the longitudinal axis of the entire screw.

Preferably, the separate helix element has, at least regionally, generally triangular cross section, more preferably isosceles triangular cross section, at least in some regions of the separate helix element. It is especially preferred that the first root serration is arranged at a first edge, in particular at a first vertex edge, of the separate helix element, and/or that the crest serration is arranged at a third edge, in particular at a third vertex edge, of the separate helix element. Accordingly, the first root serration and crest serration are located at vertices of the triangular cross section of the separate helix element. This can be advantageous in view of manufacturing and load transfer. If, optionally, the separate helix element has generally isosceles triangular cross section at least regionally, the crest serration can in particular be provided at that edge that is enclosed by two triangular sides of equal length.

The first root serration could be provided on a tipwardly facing edge of the separate helix element (i.e. at an edge that faces the tip end of the shaft) or at a rearwardly facing edge of the separate helix element (i.e. at an edge that faces the rear end of the shaft).

According to another preferred embodiment of the invention, the root is provided with a second root serration that is engaged, at least partly, by the shaft. This can further improve torsional resistance. The second root serration is, in particular, spaced from the first root serration, i.e. said root serrations do not intersperse. The second root serration is preferably arranged at a second edge, in particular second vertex edge, of the separate helix element. Accordingly, the second root serration as well is located at a vertex of the triangular cross section of the separate helix element. This can be again advantageous in view of manufacturing and load transfer. In particular, the separate helix element thus has an at least triple serration, including serrations and corresponding recesses on three vertex edges, which can all contribute to the torsional resistance. In particular, the first and second root serrations can both create an interlock between the separate helix element and the shaft (e.g. by allowing shaft material to flow in during an embossing process), whereas the crest serration can improve the concrete cutting performance, and therefore reduce the torsional force imparted on the joint between the separate helix element and the shaft during installation.

The first root serration comprises at least one first root serration recess having a length $l_{41}$, and preferably a plurality of first root serration recesses having length $l_{41}$. The crest serration comprises at least one crest serration recess having length $l_{43}$, and preferably a plurality of crest serration recesses having length $l_{43}$. If present, the second root serration comprises at least one second root serration recess having length $l_{42}$, and preferably a plurality of second root serration recesses having length $l_{42}$.

It is particular preferred that the following holds

°

$$0.15 \leq \frac{l_{41}}{l_{43}} \leq 0.55$$

and/or

°

$$0.15 \leq \frac{l_{42}}{l_{43}} \leq 0.55$$

Accordingly, the respective first root serration recess and/or the respective second root serration recess is significantly shorter in length than the respective crest serration recess. This can provide for particular good shaft engagement and cutting action. In all cases, the length can be given alongside the separate helix element, i.e. in a helical direction defined by the separate helix element.

Preferably, all first root serration recesses have the same length. However, the length of the first root serration recesses might also vary. Preferably, all second root serration recesses have the same length. However, the length of the second root serration recesses might also vary. Preferably, all crest serration recesses have the same length. However, the length of the crest serration recesses might also vary.

In addition to the first root serration recesses, second root serration recesses and the crest serration recesses, additional recesses might be provided in the separate helix element, e.g. in order to further improve functionality.

As already mentioned above, the separate helix element can preferably be connected to the shaft by means of embossing. It is thus particularly preferred that the shaft comprises a first embossment that engages the first root serration. If a second root serration is provided, it can also be preferred that the shaft comprises a second embossment that engages the second root serration.

It is particularly preferred that the shaft consists of a first material and the separate helix element consists of a second material, wherein the first material and the second material are different materials. Employing different materials for the different elements allows to resolve conflicting objectives regarding the materials in a particular easy manner.

Preferably, both the first material and the second material are metals, in particular steels, more particular stainless steels. One or more coating might be provided on the shaft and/or the sperate helix element.

In particular, a ratio of the maximum outer thread diameter of the screw thread to the pitch of the screw thread can be between 1 and 2, in particular between 1,2 and 1,6, at least in some regions of the screw thread, more preferably at least in some regions of the screw thread located near the tip end, most preferably throughout the screw thread. These are typical dimensions for concrete screws.

According to another preferred embodiment, at least some of the first root serration recesses of the first root serration, at least some of the second root serration recesses of the second root serration and/or at least some of the crest serration recesses of the crest serration are formed by means of a cutting process, preferably by means of laser cutting process. This can permit particularly efficient manufacturing.

The invention is explained in greater detail below with reference to preferred exemplary embodiments, which are depicted schematically in the accompanying drawings. Individual features of the exemplary embodiments presented below can be implemented either individually or in any combination within the scope of the present invention.

Figure 1 is a somewhat simplified perspective view of a concrete screw.

Figure 2 is an exploded view of the screw of figure 1.

Figure 3 is a detail view of the separate helix element of the screw of figure 1, near the tip of the screw.

Figure 4 is a detail side view of the of the separate helix element of the screw of figure 1, near the tip of the screw.

Figure 5 is a cross-sectional view of the of the separate helix element of the screw of figure 1, near the tip of the screw.

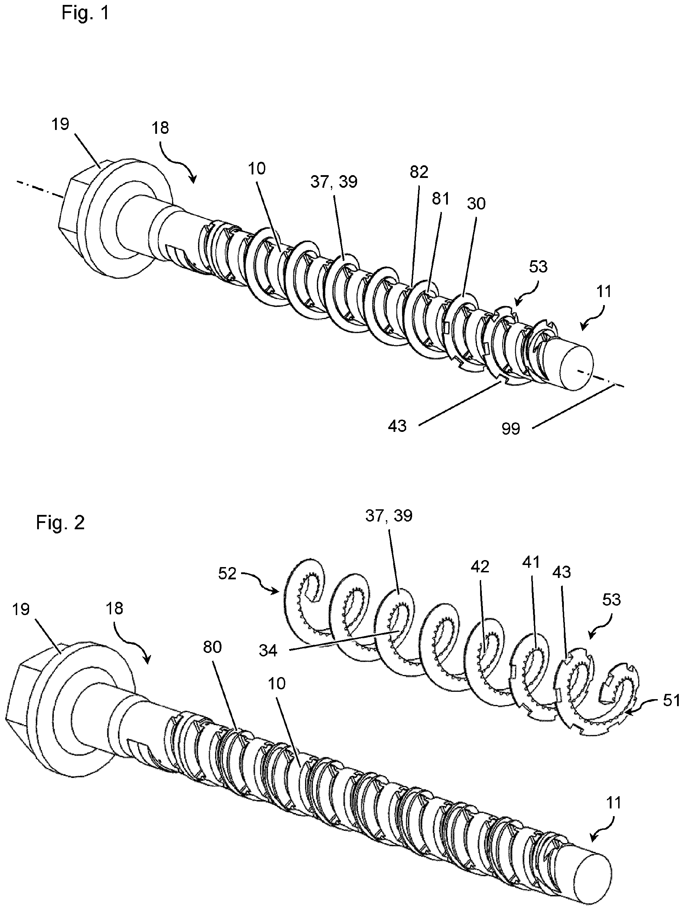

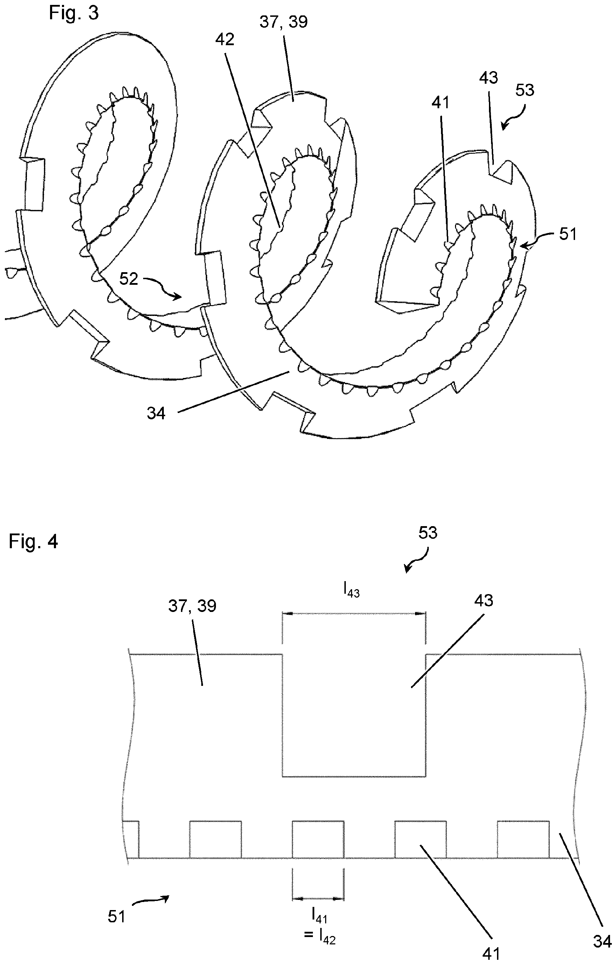

Figures 1 to 5 illustrate an embodiment of a concrete screw. The screw comprises an elongate shaft 10, which has a tip end 11. The tip end 11 is the leading end of the shaft 10 and the shaft 10 is intended to be inserted with the tip end 11 first into a borehole when the screw is installed. The shaft 10 also has rear end 18, which is located on the shaft 10 opposite the tip end 11. The screw furthermore has a screw drive 19 that is provided on the shaft 10, for applying torque to the shaft 10. In the shown embodiment, the screw drive 19 is a hex head located at the rear end 18, and monolithically connected to the shaft 10, but this is an example only. Any other type of screw drive 19 can be used, such as an external type, for example hex, line (ALH), square, or a socket head, for example Bristol, clutch, double hex, hex socket, hexalobular socket, line (ALR), polydrive, Robertson, spline, TP3, and others. The screw drive 19 could also be located within the shaft 10 and/or remote from the rear end 18, in particular if the screw is headless and/or internally threaded.

The elongate shaft 10 comprises a longitudinal axis 99, extending in the longitudinal direction of the shaft 10 and through both the tip end 11 and through the rear end 18.

The screw furthermore comprises a separate helix element 37, which is located on the shaft 10, and which winds around the shaft 10 and/or the longitudinal axis 99. In particular, the separate helix element 37 is arranged coaxially with respect to the shaft 10. The separate helix element 37 comprises a crest 39 and a root 34. In particular, the crest 39 is helical and radially adjoins the root 34, which is also helical. The root 34 is located on the radial inside of the separate helix element 37, i.e. it is located closer to the longitudinal axis 99 of the shaft 10 than is the adjacent crest 39.

The separate helix element 37, in particular the crest 39 thereof, constitutes at least a helical section of a screw thread 30 of the screw. In the shown embodiment, the separate helix element 37, in particular the crest 39 thereof, constitutes all of the screw thread 30 of the screw, but this is an example only, and the screw thread 30 might have additional helical sections. The screw thread 30 is located on the shaft 10, winds around the shaft 10 and/or the longitudinal axis 99, and projects radially, with respect to the longitudinal axis 99, from the shaft 10. The screw thread 30 is an external screw thread.

The separate helix element 37 and the shaft 10 are non-monolithic with respect to one another. Due to the latter, the screw thread 30 and the shaft 10 are also non-monolithic with respect to one another, at least regionally.

The shaft 10 consists of a first material. The separate helix element 37 consists of a second material. In the present embodiment, the first material and the second material are different materials. The first material can in particular be a metal material, preferably a steel material, most preferably a stainless steel. The second material can in particular be a metal material, preferably a steel material, most preferably a stainless steel. The shaft 10 and/or the separate helix element 37 could also be provided with a respective coating, comprising one or more layers.

In the present embodiment, the separate helix element 37 and/or the screw thread 30 has a plurality of turns, namely approximately 7,5 turns. Preferably, at least two turns are provided.

Whereas in the shown embodiment, no additional screw threads are shown, the screw might also have additional screw threads, formed monolithically or non-monolithically with respect to the shaft 10.

The screw is a concrete screw, i.e. the screw thread 30 is able to tap, in particular cut, a corresponding mating thread in a concrete substrate. In particular, the crest 39 of the separate helix element 37 is able to cut into a concrete substrate and/or to form a positive interlock with the concrete substrate. The screw thread 30 has an outer thread diameter. At least near the tip end 11 of the non-installed screw, a ratio of the maximum outer thread diameter of the screw thread 30 to the pitch of the screw thread 30 is between 1 and 2, in particular between 1,2 and 1,6.

The screw thread 30 might be strictly mathematically helical, but might also deviate from a helical form, which can e.g. provide additional functionality.

The shaft 10 is provided with a helical groove 80, which winds around the longitudinal axis 99 of the shaft 10, and which projects, on the lateral surface of the shaft 10, radially into the shaft 10. The separate helix element 37, in particular the root 34 thereof, is arranged within the groove 80, whereas its crest 39 projects from the shaft 10.

The shaft 10 is provided with a first lateral embossment 81 and a second lateral embossment 82, wherein both the first embossment 81 and the second embossment 82 secure the separate helix element 37 on the shaft 10, in particular they secure the separate helix element 37, in particular its root 34, within the groove 80 in a claw-like manner. Both the first embossment 81 and the second embossment 82 have both axial (with respect to the longitudinal axis 99) overlap and radial (with respect to the longitudinal axis 99) overlap with the adjacent separate helix element 37, in particular with the root 34 thereof. Both the first embossment 81 and the second embossment 82 clamp the separate helix element 37, in particular the root 34 thereof, against the shaft 10. In particular, they clamp the separate helix element 37, in particular the root 34 thereof, in the radial and axial directions (with respect to the longitudinal axis 99).

The second embossment 82 projects forwardly, i.e. tipwardly, i.e. towards the tip end 11, whereas the first embossment 81 projects rearwardly, i.e. towards the rear end 18, in particular headwardly. The second embossment 82 clamps a rearwardly facing flank of the separate helix element 37, whereas the first embossment 81 clamps a forwardly facing, i.e. tipwardly facing, flank of the separate helix element 37.

In the present embodiment, the first embossment 81 and the second embossment 82 extend all along the separate helix element 37, i.e. both the first embossment 81 and the second embossment 82 have the same number of turns as the separate helix element 37 has, wherein the first embossment 81 and the second embossment 82 subduct near the tip end 11. But this is an example only.

Both the first embossment 81 and the second embossment 82 face, and preferably adjoin, the separate helix element 37. Both the first embossment 81 and the second embossment 82 adjoin the groove 80, and the first embossment 81 delimits the groove 80 rearwardly, and the second embossment 82 delimits the groove forwardly (i.e. tipwardly), i.e. the first embossment 81 forms a forwardly facing (i.e. tipwardly facing) flank of the groove 80, and the second embossment 82 forms a rearwardly facing flank of the groove 80. The first embossment 81 and the second embossment 82 form an undercut structure at the groove 80, and the groove is thus an undercut groove 80. In the present embodiment, the undercut structure of the groove 80 extends all along the separate helix element 37, but this is an example only. The first embossment 81, the second embossment 82 and the undercut groove 80 are shown to be continuous, but could also be provided with discontinuities, e.g. voids. The undercut structure of the groove 80 secures the separate helix element 37, in particular the root 34 thereof, on the shaft 10. The bottom of the groove 80 is formed by the shaft 10, in particular by the lateral surface thereof.

Preferably, the first embossment 81 and the second embossment 82 form the primary connection between the separate helix element 37 and the shaft 10. An additional material connection (for example gluing, or material connections based on heat input, such as brazing or welding) could also be provided, but are preferably absent.

The first embossment 81 and the second embossment 82 radially project over the adjacent lateral surface of the shaft 10, i.e. they each form a raised shoulder that radially projects from the shaft 10.

The separate helix element 37 has generally triangular cross-section, namely that of an isosceles triangle, wherein the two sides of equal length are provided by the forwardly facing flank and the rearwardly facing flank of the separate helix element 37, respectively.

A crest serration 53 comprising a plurality of crest serration recesses 43, each having length $l_{43}$, is provided in the separate helix element 37, namely in the crest 39, at a crest vertex edge of the separate helix element 37. A first root serration 51 comprising a plurality of first root serration recesses 41, each having length $l_{41}$, is provided in the separate helix element 37, namely in the root 34, at a (forwardly facing) first root vertex edge of the separate helix element 37. A second root serration 52 comprising a plurality of second root serration recess 42, each having length $l_{42}$, is provided in the separate helix element 37, namely in the root 34, at a (rearwardly facing) second root vertex edge of the separate helix element 37. The first embossment 81 of the shaft 10 engages the first root serration 51, whereas the second embossment 82 engages the second root serration 52.

The crest serration recesses 43 are, when regarded along the separate helix element 37, longer than the root serration recesses 42 and 43. In particular, the following holds:

$$0.15 \leq \frac{l_{41}}{l_{43}} \leq 0.55$$

$$0.15 \leq \frac{l_{42}}{l_{43}} \leq 0.55$$

In particular, the root serration recesses 42 and 43 are symmetrical about the vertical centroid of the profile of the separate helix element 37.

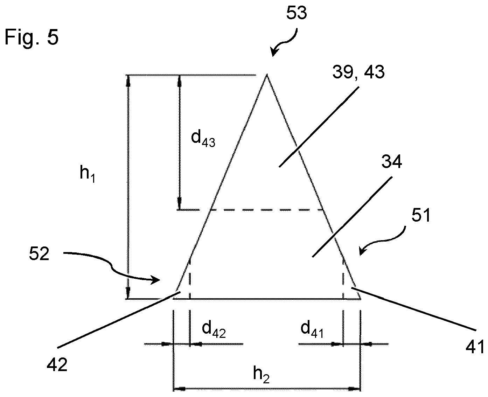

As indicated in figure 5, the following holds for the depth $d_{41}$ of the first root serration recesses 41 and the depth $d_{42}$ of the second root serration recesses 42 (wherein depth can be in particular considered perpendicular to the centroid):

$$d_{41} = d_{42} \geq h_2 \times 0.06$$

$$d_{41} = d_{42} \leq h_2 \times 0.12$$

Wherein $h_2$ is the width of the root 34.

And the following holds for the depth $d_{43}$ of the crest serration recesses 43

$$d_{43} \geq h_1 \times 0.4$$

$$d_{43} \leq h_1 \times 0.8$$

Wherein $h_1$ is the heigh of the separate helix element 37 in the radial direction.

When the concrete screw is installed, a borehole is drilled in a concrete substrate according to the nominal diameter of the concrete screw. A baseplate that is to be attached might be present during drilling or might be positioned relatively to the borehole later. The drilled borehole has smaller diameter than the outer diameter of the screw thread 30 of the concrete screw. This allows the concrete screw to engage the concrete with an undercutting at the screw thread 30 when the concrete screw is subsequently screwed into the borehole, e.g. with an impact wrench.

## Claims

1. Concrete screw comprising

   - a shaft (10),
   - at least one screw thread (30), which is arranged on the shaft (10), winds around the shaft (10) and protrudes from the shaft (10), and
   - a separate helix element (37), which is arranged non-monolithically on the shaft (10), wherein the separate helix element (37) winds around the shaft (10), protrudes from the shaft (10), and constitutes at least a section of the at least one screw thread (30),
   - wherein the separate helix element (37) comprises a crest (39) and a root (34), and
   - wherein the root (34) is provided with a first root serration (51) that is engaged, at least partly, by the shaft (10),

   **characterized in that**

   - the crest (39) is provided with a crest serration (53).

2. Screw according to claim 1,

**characterized in that**
the separate helix element (37) has, at least regionally, generally triangular cross section, wherein the first root serration (51) is arranged at a first edge of the separate helix element (37), and wherein the crest serration (53) is arranged at a third edge of the separate helix element (37).

3. Screw according to claim 2,
**characterized in that**
the separate helix element (37) has, at least regionally, generally isosceles triangular cross section.

4. Screw according to any of the preceding claims,
**characterized in that**
the root (34) is provided with a second root serration (52) that is engaged, at least partly, by the shaft (10).

5. Screw according to claim 4 in connection with any of the claims 2 or 3,
**characterized in that**
the second root serration (52) is arranged at a second edge of the separate helix element (37).

6. Screw according to any of the preceding claims,

**characterized in that**
the first root serration (51) comprises at least one first root serration recess (41) having length $l_{41}$, and
the crest serration (53) comprises at least one crest serration recess (43) having length $l_{43}$, wherein the following holds:

○

$$0.15 \leq \frac{l_{41}}{l_{43}} \leq 0.55$$

7. Screw according to any of the preceding claims,
**characterized in that**
the shaft (10) comprises a first embossment (81) that engages the first root serration (51).

8. Screw according to any of the proceeding claims,
**characterized in that**
the shaft (10) consists of a first material and the separate helix element (37) consists of a second material, wherein the first material and the second material are different materials.

9. Screw according to claim 8,
**characterized in that**
both the first material and the second material are metals, in particular stainless steels.

10. Screw according to any of the proceeding claims,

**characterized in that**
a ratio of the maximum outer thread diameter of the screw thread (30) to the pitch of the screw thread (30) is between 1 and 2, in particular between 1,2 and 1,6, at least in some regions of the screw thread (30).

11. Method for manufacturing a screw according to any of the preceding claims,
**characterized in that**
at least some of the first root serration recesses (41) of the first root serration (51) and/or at least some of the crest serration recesses (43) of the crest serration (53) are formed by means of a cutting process, preferably by means of laser cutting process.

Fig. 1

Fig. 2

Fig. 3

Fig. 4

Fig. 5

Europäisches
Patentamt

European
Patent Office

Office européen
des brevets

# EUROPEAN SEARCH REPORT

**Application Number**

EP 23 17 5608

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2016/223006 A1 (HETTICH ULRICH [DE]) 4 August 2016 (2016-08-04) * paragraphs [0002], [0020], [0069] – [0078]; figures 1-7 * | 1-3,6-11 | INV. F16B25/00 ADD. B23G9/00 B23K26/38 |
| X | WO 2011/005379 A1 (ILLINOIS TOOL WORKS [US]; GONG YONGPING [US]; PANASIK CHERYL L [US]) 13 January 2011 (2011-01-13) * paragraphs [0001] – [0025]; figures 1-3 * | 1-6,8-11 | |
| A | US 2019/240753 A1 (JUKES CARL [GB] ET AL) 8 August 2019 (2019-08-08) * the whole document * | 11 | |
| A,D | WO 2021/239518 A1 (HILTI AG [LI]) 2 December 2021 (2021-12-02) * the whole document * | 1-11 | |

**TECHNICAL FIELDS SEARCHED (IPC)**

F16B
B23G
B23K

The present search report has been drawn up for all claims

| Place of search | Date of completion of the search | Examiner |
|---|---|---|
| Munich | 31 October 2023 | Gutiérrez Royo, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 17 5608

This annex lists the patent family members relating to the patent documents cited in the above-mentioned European search report.
The members are as contained in the European Patent Office EDP file on
The European Patent Office is in no way liable for these particulars which are merely given for the purpose of information.

31-10-2023

| Patent document cited in search report | | Publication date | Patent family member(s) | | Publication date |
|---|---|---|---|---|---|
| US 2016223006 | A1 | 04-08-2016 | CA | 2922875 A1 | 19-03-2015 |
| | | | DE | 102013109987 A1 | 12-03-2015 |
| | | | EP | 3044468 A1 | 20-07-2016 |
| | | | EP | 3663596 A1 | 10-06-2020 |
| | | | ES | 2818579 T3 | 13-04-2021 |
| | | | PL | 3044468 T3 | 08-02-2021 |
| | | | PL | 3663596 T3 | 16-10-2023 |
| | | | US | 2016223006 A1 | 04-08-2016 |
| | | | WO | 2015036182 A1 | 19-03-2015 |
| WO 2011005379 | A1 | 13-01-2011 | DK | 2452085 T3 | 19-09-2022 |
| | | | EP | 2452085 A1 | 16-05-2012 |
| | | | US | 2011002753 A1 | 06-01-2011 |
| | | | WO | 2011005379 A1 | 13-01-2011 |
| US 2019240753 | A1 | 08-08-2019 | EP | 3525971 A1 | 21-08-2019 |
| | | | EP | 3525972 A1 | 21-08-2019 |
| | | | GB | 2554919 A | 18-04-2018 |
| | | | US | 2019240753 A1 | 08-08-2019 |
| | | | US | 2019240754 A1 | 08-08-2019 |
| | | | WO | 2018069668 A1 | 19-04-2018 |
| | | | WO | 2018069677 A1 | 19-04-2018 |
| WO 2021239518 | A1 | 02-12-2021 | AU | 2021280983 A1 | 03-11-2022 |
| | | | CA | 3179398 A1 | 02-12-2021 |
| | | | CN | 115461550 A | 09-12-2022 |
| | | | EP | 3916245 A1 | 01-12-2021 |
| | | | EP | 4158209 A1 | 05-04-2023 |
| | | | TW | 202144680 A | 01-12-2021 |
| | | | US | 2023175543 A1 | 08-06-2023 |
| | | | WO | 2021239518 A1 | 02-12-2021 |

EPO FORM P0459

For more details about this annex : see Official Journal of the European Patent Office, No. 12/82

**REFERENCES CITED IN THE DESCRIPTION**

**Patent documents cited in the description**

- EP 3916246 A1
- EP 2501944 B1
- WO 22231920 A1
- EP 3380737 B1
- EP 2980424 A1